# EUROPÄISCHE PATENTSCHRIFT

(11) **EP 0 961 706 B1**
(45) Veröffentlichungstag und Bekanntmachung des Hinweises auf die Patenterteilung: **29.05.2002**
(21) Anmeldenummer: 98904157.9
(22) Anmeldetag: 29.01.1998
(51) Int. Cl.: B60K 15/077

(54) **VORRICHTUNG ZUR VERRINGERUNG VON SCHWALLGERÄUSCHEN IN EINEM KRAFTSTOFFBEHÄLTER**
DEVICE FOR REDUCING SPLASH NOISES IN A FUEL TANK
DISPOSITIF POUR REDUIRE LES BRUITS D'ECLABOUSSEMENT DE LIQUIDE DANS UN RESERVOIR DE CARBURANT

(30) Priorität: 20.02.1997 DE 19706658
(43) Veröffentlichungstag der Anmeldung: 08.12.1999
(73) Patentinhaber: Siemens Aktiengesellschaft, 80333 München (DE)
(72) Erfinder: KELLER, Dieter, D-63743 Aschaffenburg (DE)
(86) Internationale Anmeldenummer: EP9800458
(87) Internationale Veröffentlichungsnummer: WO9836929

(56) Entgegenhaltungen:
- DE-A- 2 847 117
- DE-C- 861 969
- PATENT ABSTRACTS OF JAPAN vol. 097, no. 001, 31.Januar 1997 & JP 08 244481 A (DAIHATSU MOTOR CO LTD), 24.September 1996,
- PATENT ABSTRACTS OF JAPAN vol. 009, no. 282 (M-428), 9.November 1985 & JP 60 124522 A (NISSAN JIDOSHA KK), 3.Juli 1985,

## Beschreibung

Die Erfindung betrifft eine Vorrichtung zur Verringerung von Schwallgeräuschen in einem Kraftstoffbehälter eines Kraftfahrzeuges mit in dem Kraftstoffbehälter angeordneten Dämpfungselementen.

Solche Vorrichtungen werden beispielsweise in Rennfahrzeugen vielfach eingesetzt und sind damit bekannt. Hierbei sind die Dämpfungselemente häufig als im dem Kraftstoffbehälter angeordnete Schwallwände ausgebildet. Die Schwallwände unterteilen den Kraftstoffbehälter in mehrere Kammern. Der in Richtung einer Wandung des Kraftstoffbehälters beschleunigte Kraftstoff umströmt zunächst eine davor angeordnete Schwallwand bevor er gegen die Wandung gelangt.

Nachteilig bei den bekannten Kraftstoffbehältern ist, daß trotz Anordnung der Schwallwände in dem Kraftstoffbehälter störende Schwallgeräusche entstehen. Im ungünstigsten Fall können die Schwallwände der bekannten Vorrichtung sogar Schwallgeräusche verursachen, wenn Kraftstoff gegen die Schwallwände schwappt oder wenn die Schwallwände die Strömung des Kraftstoffs senkrecht auf die Wandung des Kraftstoffbehälters lenken (JP-A-60 124522).

Der Erfindung liegt das Problem zugrunde, eine Vorrichtung der eingangs genannten Art so zu gestalten, daß sie störende Schwallgeräusche möglichst stark verringert.

Dieses Problem wird erfindungsgemäß dadurch gelöst, daß Dämpfungselemente als Leitelemente und Leitwände zum Lenken der Strömung des Kraftstoffs auf die Wandung des Kraftstoffbehälters in einem von 90° abweichenden Winkel und zum Drosseln der Geschwindigkeit der Strömung ausgebildet sind.

Durch diese Gestaltung wird ein senkrechtes Auftreffen einer starken Strömung vermieden. Die entstehenden Schwallgeräusche sind umso geringer, je flacher der Winkel ist, in dem die Strömung auf die Wandung gelenkt wird, und je geringer die Strömungsgeschwindigkeit des Kraftstoffs ist. Der von den Leitelementen oder den Leitwänden umgelenkte Kraftstoff strömt anschließend nahezu geräuschfrei an der Wandung entlang. Schwallgeräusche im Kraftstoffbehälter werden hierdurch deutlich verringert. Bei einer gleichzeitigen Drosselung der Strömungsgeschwindigkeit und Lenkung der Strömung des Kraftstoffs werden die Schwallgeräusche fast vollständig vermieden.

Die Strömung des Kraftstoffs läßt sich gemäß einer vorteilhaften Weiterbildung der Erfindung einfach in eine vorgesehene Richtung lenken, wenn die Leitwände untereinander oder mit dem Boden des Kraftstoffbehälters einen Kanal bilden. Hierbei sind die Leitwände in einem flachen Winkel zur Strömungsrichtung angeordnet, so daß keine störenden Schwallgeräusche beim Auftreffen der Strömung auf die Leitwände entstehen.

Die Strömungsgeschwindigkeit des Kraftstoffs wird gemäß einer anderen vorteilhaften Weiterbildung der Erfindung gedrosselt, wenn der Kanal eine Querschnittserweiterung als Beruhigungsbereich aufweist. Im einfachsten Fall sind die Leitwände mit geringem Abstand zum Boden des Kraftstoffbehälters angeordnet und steigen zu den seitlichen Wandungen des Kraftstoffbehälters an. Hierbei wird unter den Leitwänden hindurchströmender Kraftstoff in dem Beruhigungsbereich gedrosselt und über die Leitwand hinwegströmender Kraftstoff nach oben hin abgelenkt. Weitere zum Lenken der Strömung vorgesehene Leitelemente können beispielsweise an den Leitwänden oder an dem Boden des Kraftstoffbehälters angeordnet sein.

Beim Bremsen oder beim Beschleunigen des Kraftfahrzeuges entstehen besonders starke Schwallgeräusche. Diese Schwallgeräusche lassen sich gemäß einer anderen vorteilhaften Weiterbildung der Erfindung besonders stark dämpfen, wenn in einem vorderen und in einem hinteren Bereich des Kraftstoffbehälters jeweils Kanäle bildende Leitwände angeordnet sind.

Die Geschwindigkeit des die Leitwände überströmenden Kraftstoffs wird gemäß einer anderen vorteilhaften Weiterbildung der Erfindung gedrosselt, wenn vor dem Beruhigungsbereich ein trichterförmiger Einströmbereich angeordnet ist. Durch die trichterförmige Gestaltung wird der Kraftstoff zudem bei unterschiedlichen Füllständen im Kraftstoffbehälter gleichmäßig dem Beruhigungsbereich zugeführt.

Die Strömungsgeschwindigkeit des Kraftstoffs läßt sich gemäß einer anderen vorteilhaften Weiterbildung der Erfindung weiter verringern, wenn nach dem Beruhigungsbereich ein Ausströmbereich mit einem im Verhältnis zu dem Querschnitt des Beruhigungsbereichs größeren Querschnitt angeordnet ist.

Zur weiteren Verringerung der Schwallgeräusche in dem Kraftstoffbehälter trägt es gemäß einer anderen vorteilhaften Weiterbildung der Erfindung bei, wenn die Leitelemente am strömungsseitigen Ende des Kanals angeordnet sind.

Bei einem die Leitwände überdeckenden Füllstand von Kraftstoff im Kraftstoffbehälter könnte der Teil des Kraftstoffs, der die Leitwände überströmt, gegen die Wandung des Kraftstoffbehälters prallen und Schwallgeräusche hervorrufen. Man könnte daran denken, auf der Oberseite der Leitwände ebenfalls Leitelemente anzuordnen, die den die Leitwände überströmenden Kraftstoff in einem flachen Winkel auf die Wandung lenken. Solche zusätzlich vorzusehenden Leitelemente lassen sich jedoch gemäß einer anderen vorteilhaften Weiterbildung der Erfindung vermeiden, wenn die Leitelemente zur Umkehr der Strömungsrichtung des aus dem Kanal ausströmenden Kraftstoffs schaufelförmig gestaltet sind. Hierdurch wird der Teil des Kraftstoffs, der die Leitwände überströmt, von dem Kraftstoff ausgelenkt, der von den zur Strömungsumkehr vorgesehenen Leitschaufeln abgelenkt wurde.

Der Kraftstoff verläßt den Beruhigungsbereich gemäß einer anderen vorteilhaften Weiterbildung der Erfindung mit einer besonders geringen Geschwindigkeit, wenn zumindest eines der Leitelemente in dem Beruhigungsbereich angeordnet ist.

Die Schwallgeräusche sind gemäß einer anderen vorteilhaften Weiterbildung der Erfindung besonders gering, wenn in dem Beruhigungsbereich ein im wesentlichen senkrecht zur Strömungsrichtung ausgerichtetes Stauelement angeordnet ist. Hierbei verringert das Stauelement die Strömungsgeschwindigkeit in dem Beruhigungsbereich. Anschließend können weitere Leitelemente zum Lenken der zuvor verlangsamten Strömung vorgesehen sein.

Zur weiteren Verringerung der Schwallgeräusche bei unterschiedlichen Füllständen im Kraftstoffbehälter trägt es bei, wenn die Leitwände in unterschiedlicher Höhe und im wesentlichen parallel zum Boden des Kraftstoffbehälters angeordnet sind. Bei nahezu vollem Kraftstoffbehälter verhindern hierbei die obersten Leitelemente die Schwallgeräusche, während bei nahezu leerem Kraftstoffbehälter die untersten Leitelemente die Strömung geräuschmindernd lenken.

Die Strömung im Kraftstoffbehälter wird gemäß einer anderen vorteilhaften Weiterbildung der Erfindung nahezu verwirbelungsfrei in einem flachen Winkel auf die seitliche Wandung des Kraftstoffbehälters gelenkt, wenn die Leitelemente flügelförmig gestaltet sind.

Häufig sind die Richtungen der die Schwallgeräusche hervorrufenden Strömung im Kraftstoffbehälter nicht zuverlässig vorhersehbar. Bei einem senkrechten Auftreffen der Strömung auf ein Leitelement oder ein Stauelement entstehende Schwallgeräusche lassen sich gemäß einer anderen vorteilhaften Weiterbildung der Erfindung einfach dadurch reduzieren, daß die Leitelemente oder die Stauelemente eine Vielzahl von Durchlässen aufweisen. Durch diese Gestaltung kann ein Teil des senkrecht auf die Leitschaufeln aufprallenden Kraftstoffs durch die Durchlässe hindurchströmen. Der Aufprall der Strömung wird hierdurch stark gedämpft. Eine schräg auf die mit den Durchlässen versehenen Leitelemente auftreffende Strömung wird jedoch weitgehend in die vorgesehene Richtung abgelenkt.

Ein starker Aufprall des Kraftstoffs auf die Leitelemente läßt sich gemäß einer anderen vorteilhaften Weiterbildung der Erfindung einfach dämpfen, wenn die Leitelemente federnd gestaltet sind.

Die Strömung wird gemäß einer anderen vorteilhaften Weiterbildung der Erfindung der Intensität der Strömung entsprechend stark abgelenkt, wenn die Leitelemente einen federnden Arm aufweisen und wenn an dem federnden Arm ein Leitflügel befestigt ist.

Eine Schwallgeräusche erzeugende Strömungsrichtung des Kraftstoffs in dem Kraftstoffbehälter läßt sich einfach vermeiden, wenn die erfindungsgemäße Vorrichtung Klappventile zum Drosseln einer Strömung des Kraftstoffs in einer Richtung aufweist.

Die erfindungsgemäße Vorrichtung läßt sich besonders kostengünstig herstellen, wenn die Leitelemente und/oder die Leitwände einteilig mit einer Wandung oder einem Boden des Kraftstoffbehälters gefertigt sind. Dies ist insbesondere bei aus Kunststoff im Spritzgießverfahren gefertigten Kraftstoffbehältern von Vorteil, da die Leitelemente und/oder die Leitwände bereits bei der Herstellung des Kraftstoffbehälters vorgesehen werden können.

Heutige Kraftstoffbehälter weisen in der Regel an ihrer Oberseite eine zum Einsetzen einer Fördereinheit vorgesehene Öffnung auf. In solchen Kraftstoffbehältern lassen sich die Leitelemente einfach einsetzen, wenn die Leitelemente zum Hindurchführen durch eine in der Wandung des Kraftstoffbehälters eingearbeitete Öffnung vorgesehen sind. Dies ist insbesondere bei im Blasverfahren gefertigten Kraftstoffbehältern vorteilhaft, da sich die Leitelemente nach dem Blasen besonders zuverlässig positionieren lassen.

Die Leitelemente und/oder die Leitwände können in dem Kraftstoffbehälter beispielsweise festgeschraubt oder festgeklemmt werden. Die Leitelemente und/oder die Leitwände sind jedoch gemäß einer anderen vorteilhaften Weiterbildung der Erfindung besonders dauerhaft in dem Kraftstoffbehälter befestigt, wenn sie mit dem Boden oder der Wandung des Kraftstoffbehälters verschweißt sind.

Die Erfindung läßt zahlreiche Ausführungsformen zu. Zur weiteren Verdeutlichung ihres Grundprinzips sind mehrere davon in der Zeichnung dargestellt und werden nachfolgend beschrieben. Diese zeigt in
- Figur 1: ein in einem Kraftstoffbehälter angeordneten, von einer Leitwand begrenzten Kanal,
- Figur 2: mehrere parallel zu einem Boden des Kraftstoffbehälters angeordnete Leitwände,
- Figur 3: auf dem Boden des Kraftstoffbehälters befestigte Leitelemente und Leitwände,
- Figur 4: zur Strömungsumkehr vorgesehene Leitelemente.

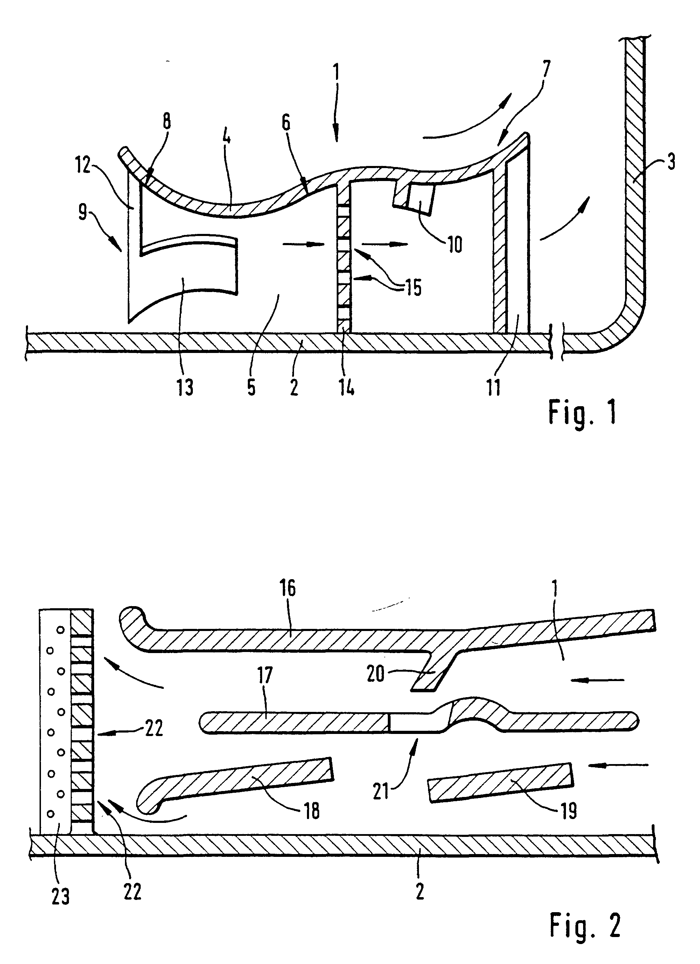

Die Figur 1 zeigt den unteren Bereich eines Kraftstoffbehälters 1 mit einem Boden und einer seitlichen Wandung 3. In dem Kraftstoffbehälter 1 ist eine Leitwand 4 angeordnet, die zusammen mit dem Boden 2 einen Kanal 5 bildet. Der Kanal 5 weist einen Beruhigungsbereich 6 mit einer Querschnittserweiterung auf. An dem Beruhigungsbereich 6 schließt sich ein Ausströmbereich 7 mit einem im Verhältnis zu dem Querschnitt des Beruhigungsbereichs 6 größeren Querschnitt an. Vor dem Beruhigungsbereich 6 ist ein trichterförmiger Einströmbereich 8 angeordnet. In dem Einströmbereich 8, dem Beruhigungsbereich 6 und dem Ausströmbereich 7 ist jeweils ein Leitelement 9 - 11 befestigt.

Das in dem Einströmbereich 8 angeordnete Leitelement 9 hat einen federnden Arm 12, an dem ein Leitflügel 13 befestigt ist. Bei einer auf den Leitflügel 13 auftreffenden Strömung von Kraftstoff verdreht sich der Arm 12 entsprechend der Strömungsgeschwindigkeit. Hierdurch wird die Strömung zunächst gedämpft und teilweise zur Seite abgelenkt. In dem Beruhigungsbereich 6 ist ein Stauelement 14 angeordnet, welches die Strömungsgeschwindigkeit des Kraftstoffs drosselt. Das Stauelement 14 weist eine Vielzahl von Durchlässen 15 auf, durch die der Kraftstoff hindurchströmt. Die gedrosselte Strömung wird anschließend von den im Beruhigungsbereich 6 und im Ausströmbereich 7 angeordneten Leitelementen 10, 11 in einem flachen Winkel gegen die Wandung 3 des Kraftstoffbehälters 1 gelenkt. Über die Leitwand 4 strömender Kraftstoff wird von dem den Ausströmbereich 7 bildenden Teil der Leitwand 4 nach oben hin abgelenkt. Hierdurch wird verhindert, daß in Richtung der Wandung 3 des Kraftstoffbehälters 1 beschleunigter Kraftstoff auf der Wandung 3 aufprallt. Zur Verdeutlichung ist in der Zeichnung die Strömung des Kraftstoffs mit Pfeilen gekennzeichnet.

Die Figur 2 zeigt mehrere übereinander und nebeneinander in dem Kraftstoffbehälter 1 angeordnete Leitwände 16 - 19. Die oberste Leitwand 16 verläuft weitgehend parallel zu dem Boden 2 des Kraftstoffbehälters 1 und ist einteilig mit einem schräg nach unten weisenden Leitelement 20 verbunden. Die mittlere Leitwand 17 hat eine Öffnung 21, durch die Kraftstoff hindurchströmen kann. Die unteren beiden Leitwände 18, 19 sind von rechts nach links geneigt angeordnet. Von rechts nach links strömender Kraftstoff verliert einen großen Teil seiner kinetischen Energie. Anschließend gelangt die gedrosselte Strömung auf ein senkrecht stehendes, mit einer Vielzahl von Durchlässen 22 versehenes Leitelement 23. Ein Teil des Kraftstoffs gelangt durch die Durchlässe 22 des Leitelementes 23 hindurch. Der größte Teil der Strömung wird jedoch von dem Leitelement 23 in die Zeichenebene hinein abgelenkt. Durch diese Gestaltung wird die Strömung bei beliebigen Füllständen des Kraftstoffs in dem Kraftstoffbehälter 1 gedrosselt und anschließend seitlich ausgelenkt.

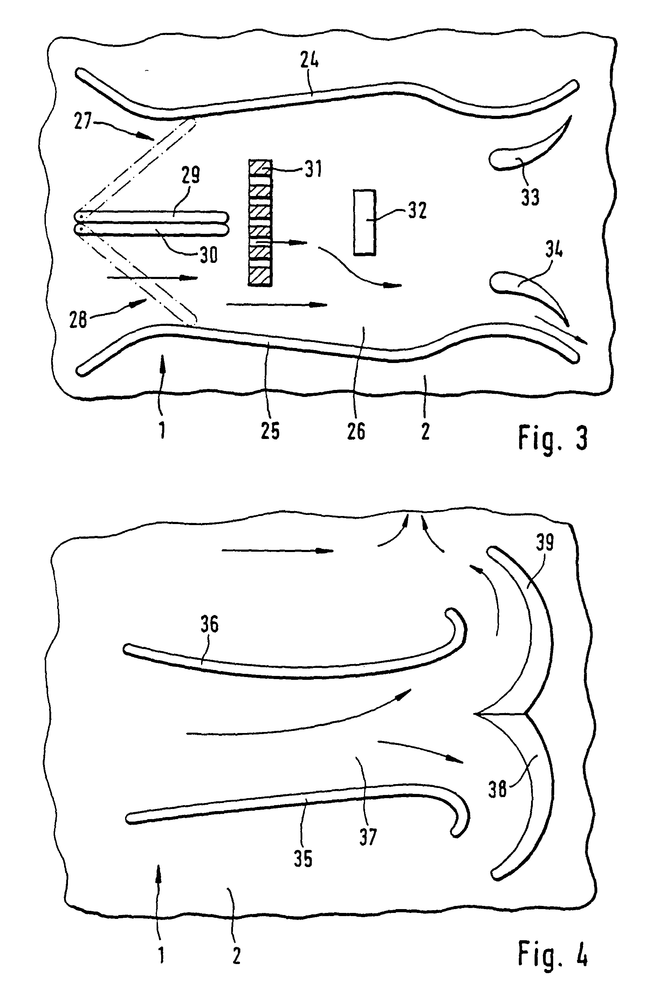

Die Figur 3 zeigt in einer Ansicht von oben auf den Boden 2 des Kraftstoffbehälters 1 einen von zwei Leitwänden 24, 25 gebildeten Kanal 26. In dem einlaßseitigen Bereich des Kanals 26 sind zwei Klappventile 27, 28 mit Flügeltüren 29, 30 angeordnet, die in der eingezeichneten Stellung ein Durchströmen des Kanals 26 von links nach rechts ermöglichen. Bei einer Strömung des Kraftstoffs von rechts nach links bewegen sich die Flügeltüren 29, 30 auseinander, bis sie gegen die Leitwände 24, 25 gelangen und den Kanal 26 schließen. In der Zeichnung sind die den Kanal 26 schließenden Flügeltüren 29, 30 strichpunktiert eingezeichnet. Weiterhin sind in dem Kanal 26 zwei Stauelemente 31, 32 und zwei flügelförmige Leitelemente 33, 34 angeordnet. Die Stauelemente 31, 32 drosseln die Strömung, während die Leitelemente 33, 34 die Strömung zur Seite hin auslenken.

Figur 4 zeigt eine weitere Ausführungsform der Erfindung, bei der zwei senkrecht auf dem Boden 2 des Kraftstoffbehälters 1 stehende Leitwände 35, 36 einen Kanal 37 bilden. Am Ende des Kanals 37 sind zwei schaufelförmige Leitelemente 38, 39 angeordnet. Diese Leitelemente 38, 39 lenken eine durch den Kanal 37 geführte Strömung an der Außenseite der Leitwände 35, 36 zurück. Hierdurch wird außenseitig an den Leitwänden 35, 36 vorbeiströmender Kraftstoff von dem durch die Leitelemente 38, 39 umgelenkten Kraftstoff abgelenkt.

## Patentansprüche

1. Vorrichtung in einem Kraftstoffbehälter eines Kraftfahrzeuges zur Verringerung von Schwallgeräuschen wobei in dem Kraftstoffbehälter angeordnete Dämpfungselemente mit verschiedenen Ausrichtungen im gesamten Behälter als Leitelemente (9-11, 20, 33, 34, 38, 39) und Leitwände (4, 16-19, 24, 25, 35, 36) zum Lenken der Strömung des Kraftstoffs auf die Wandung (3) des Kraftstoffbehälters in einem von 90° abweichenden Winkel und zum Drosseln der Geschwindigkeit der Strömung ausgebildet sind.

2. Vorrichtung nach Anspruch 1, **dadurch gekennzeichnet, daß** die Leitwände (4, 16 - 19, 24, 25, 35, 36) untereinander oder mit dem Boden (2) des Kraftstoffbehälters (1) einen Kanal (5, 26, 37) bilden.

3. Vorrichtung nach Anspruch 1 oder 2, **dadurch gekennzeichnet, daß** der Kanal (5) eine Querschnittserweiterung als Beruhigungsbereich (6) aufweist.

4. Vorrichtung nach Anspruch 3, **dadurch gekennzeichnet, daß** vor dem Beruhigungsbereich (6) ein trichterförmiger Einströmbereich (8) angeordnet ist.

5. Vorrichtung nach zumindest einem der vorhergehenden Ansprüche, **dadurch gekennzeichnet, daß** in gegenüberliegenden Bereichen des Kraftstoffbehälters jeweils Kanäle (5, 16, 37) bildende Leitwände (4, 16 - 19, 24, 35, 36) angeordnet sind.

6. Vorrichtung nach zumindest einem der vorhergehenden Ansprüche, **dadurch gekennzeichnet, daß** nach dem Beruhigungsbereich (6) ein Ausströmbereich (7) mit einem im Verhältnis zu dem Querschnitt des Beruhigungsbereichs (6) größeren Querschnitt angeordnet ist.

7. Vorrichtung nach zumindest einem der vorhergehenden Ansprüche, **dadurch gekennzeichnet, daß** die Leitelemente (11, 23, 33, 34, 38, 39) am strömungsseitigen Ende des Kanals (5, 26, 37) angeordnet sind.

8. Vorrichtung nach zumindest einem der vorhergehenden Ansprüche, **dadurch gekennzeichnet, daß** die Leitelemente (38, 39) zur Umkehr der Strömungsrichtung des aus dem Kanal (37) ausströmenden Kraftstoffs schaufelförmig gestaltet sind.

9. Vorrichtung nach zumindest einem der vorhergehenden Ansprüche, **dadurch gekennzeichnet, daß** zumindest eines der Leitelemente (10) in dem Beruhigungsbereich (6) angeordnet ist.

10. Vorrichtung nach zumindest einem der vorhergehenden Ansprüche, **dadurch gekennzeichnet, daß** in dem Beruhigungsbereich (6) ein im wesentlichen senkrecht zur Strömungsrichtung ausgerichtetes Stauelement (14) angeordnet ist.

11. Vorrichtung nach zumindest einem der vorhergehenden Ansprüche, **dadurch gekennzeichnet, daß** die Leitwände (16 - 19) in unterschiedlicher Höhe und im wesentlichen parallel zum Boden (2) des Kraftstoffbehälters (1) angeordnet sind.

12. Vorrichtung nach zumindest einem der vorhergehenden Ansprüche, **dadurch gekennzeichnet, daß** die Leitelemente (33, 34) flügelförmig gestaltet sind.

13. Vorrichtung nach zumindest einem der vorhergehenden Ansprüche, **dadurch gekennzeichnet, daß** die Leitelemente (23) oder die Stauelemente (14) eine Vielzahl von Durchlässen (15, 22) aufweisen.

14. Vorrichtung nach zumindest einem der vorhergehenden Ansprüche, **dadurch gekennzeichnet, daß** die Leitelemente (9) federnd gestaltet sind.

15. Vorrichtung nach Anspruch 14, **dadurch gekennzeichnet, daß** die Leitelemente (9) einen federnden Arm (12) aufweisen und daß an dem federnden Arm (12) ein Leitflügel (13) befestigt ist.

16. Vorrichtung nach zumindest einem der vorhergehenden Ansprüche, **dadurch gekennzeichnet, daß** sie Klappventile (27, 28) zum Drosseln einer Strömung des Kraftstoffs in einer Richtung aufweist.

17. Vorrichtung nach zumindest einem der vorhergehenden Ansprüche, **dadurch gekennzeichnet, daß** die Leitelemente (9 - 11, 20, 33, 34 38, 39) und/oder die Leitwände (4, 16 - 19, 24, 25, 35, 36) einteilig mit einer Wandung (3) oder einem Boden (2) des Kraftstoffbehälters (1) gefertigt sind.

18. Vorrichtung nach zumindest einem der vorhergehenden Ansprüche, **dadurch gekennzeichnet, daß** die Leitelemente (9 - 11, 20, 33, 34 38, 39) und/oder die Leitwände (4, 16 - 19, 24, 25, 35, 36) zum Hindurchführen durch eine in der Wandung (3) des Kraftstoffbehälters (1) eingearbeitete Öffnung vorgesehen sind.

19. Vorrichtung nach zumindest einem der vorhergehenden Ansprüche, **dadurch gekennzeichnet, daß** die Leitelemente (9 - 11, 20, 33, 34 38, 39) und/oder die Leitwände (4, 16 - 19, 24, 25, 35, 36) mit dem Boden (2) oder der Wandung (3) des Kraftstoffbehälters (1) verschweißt sind.

## Claims

1. Device in a fuel tank of a motor vehicle for the reduction of splashing noises, wherein damping elements arranged in the fuel tank and having various orientations in the overall tank are designed as guide elements (9 - 11, 20, 33, 34, 38, 39) and guide plates (4, 16 - 19, 24, 25, 35, 36) for deflecting the flow of fuel onto the wall (3) of the fuel tank at an angle different from 90° and for throttling the velocity of the flow.

2. Device according to Claim 1, **characterized in that** the guide plates (4, 16 - 19, 24, 25, 35, 36) form relative to one another or to the bottom (2) of the fuel tank (1) a channel (5, 26, 37).

3. Device according to Claim 1 or 2, **characterized in that** the channel (5) has a cross-sectional widening as a calming region (6).

4. Device according to Claim 3, **characterized in that** a funnel-shaped inflow region (8) is arranged upstream of the calming region (6).

5. Device according to at least one of the preceding claims, **characterized in that** guide plates (4, 16-19, 24, 35, 36) forming channels (5, 16, 37) are arranged in each case in opposite regions of the fuel tank.

6. Device according to at least one of the preceding claims, **characterized in that** an outflow region (7) with a cross section larger than the cross section of the calming region (6) is arranged downstream of said calming region (6).

7. Device according to at least one of the preceding claims, **characterized in that** the guide elements (11, 23, 33, 34, 38, 39) are arranged at the flow-side end of the channel (5, 26, 37).

8. Device according to at least one of the preceding claims, **characterized in that** the guide elements (38, 39) have a scoop-shaped design in order to reverse the direction of flow of the fuel flowing out of the channel (37).

9. Device according to at least one of the preceding claims, **characterized in that** at least one of the guide elements (10) is arranged in the calming region (6).

10. Device according to at least one of the preceding claims, **characterized in that** a damming element (14) oriented essentially perpendicularly to the direction of flow is arranged in the calming region (6).

11. Device according to at least one of the preceding claims, **characterized in that** the guide plates (16 - 19) are arranged at different heights and essentially parallel to the bottom (2) of the fuel tank (1).

12. Device according to at least one of the preceding claims, **characterized in that** the guide elements (33, 34) have a wing-shaped design.

13. Device according to at least one of the preceding claims, **characterized in that** the guide elements (23) or the damming elements (14) have a multiplicity of passages (15, 22).

14. Device according to at least one of the preceding claims, **characterized in that** the guide elements (9) are designed resiliently.

15. Device according to Claim 14, **characterized in that** the guide elements (9) have a resilient arm (12), and **characterized in that** a guide wing (13) is fastened to the resilient arm (12).

16. Device according to at least one of the preceding claims, **characterized in that** there are flap valves (27, 28) for throttling a flow of the fuel in one direction.

17. Device according to at least one of the preceding claims, **characterized in that** the guide elements (9 - 11, 20, 33, 34, 38, 39) and/or the guide plates (4, 16 - 19, 24, 25, 35, 36) are manufactured in one piece with a wall (3) or a bottom (2) of the fuel tank (1).

18. Device according to at least one of the preceding claims, **characterized in that** the guide elements (9 - 11, 20, 33, 34, 38, 39) and/or the guide plates (4, 16 - 19, 24, 25, 35, 36) are intended to be led through an orifice worked in the wall (3) of the fuel tank (1).

19. Device according to at least one of the preceding claims, **characterized in that** the guide elements (9 - 11, 20, 33, 34, 38, 39) and/or the guide plates (4, 16 - 19, 24, 25, 35, 36) are welded to the bottom (2) or the wall (3) of the fuel tank (1).

## Revendications

1. Dispositif, monté dans un réservoir à carburant de véhicule automobile, pour limiter les bruits de clapotement, des éléments d'amortissement ayant différentes orientations, disposés dans le réservoir à carburant, étant réalisés dans l'ensemble du réservoir, sous forme d'éléments de guidage (9 à 11, 20, 33, 34, 38, 39) et de parois de guidage (4, 16 à 19, 24, 25, 35, 36), pour diriger l'écoulement du carburant sur la paroi (3) du réservoir de carburant, sous un angle différent de 90° et pour agir en étranglement sur la vitesse de l'écoulement.

2. Dispositif selon la revendication 1, **caractérisé en ce que** les parois de guidage (4, 16 à 19, 24, 25, 35, 36) forment, entre elles ou avec le fond (2) du réservoir à carburant (1), un canal (5, 26, 37).

3. Dispositif selon la revendication 1 ou 2, **caractérisé en ce que** le canal (5) présente un élargissement de section transversale pour faire office de zone de tranquillisation (6).

4. Dispositif selon la revendication 3, **caractérisé en ce qu'**une zone d'entrée d'écoulement (8) en forme d'entonnoir est disposée en amont de la zone de tranquillisation (6).

5. Dispositif selon au moins l'une des revendications précédentes, **caractérisé en ce que**, dans les zones opposées du réservoir de carburant, sont chaque fois disposées des parois de guidage (4, 16 à 19, 24, 35, 36) formant des canaux (5, 16,37).

6. Dispositif selon au moins l'une des revendications précédentes, **caractérisé en ce que**, en aval de la zone de tranquillisation (6), est disposée une zone de sortie d'écoulement (7) ayant une section transversale d'aire plus grande que l'aire de la section transversale de la zone de tranquillisation (6).

7. Dispositif selon au moins l'une des revendications précédentes, **caractérisé en ce que** les éléments de guidage (11, 23, 33, 34, 38, 39) sont disposés sur l'extrémité, côté écoulement, du canal (5, 26, 37).

8. Dispositif selon au moins l'une des revendications précédentes, **caractérisé en ce que** les éléments de guidage (38, 39) sont configurés en forme de pales, pour inverser le sens de l'écoulement du carburant sortant du canal (37).

9. Dispositif selon au moins l'une des revendications précédentes, **caractérisé en ce qu'**au moins l'un des éléments de guidage (10) est disposé dans la zone de tranquillisation (6).

10. Dispositif selon au moins l'une des revendications précédentes, **caractérisé en ce qu'**un élément de retenue (14), orienté pratiquement perpendiculairement par rapport à la direction d'écoulement, est disposé dans la zone de tranquillisation (6)

11. Dispositif selon au moins l'une des revendications précédentes, **caractérisé en ce que** les parois de guidage (16 à 19) sont disposées à différents niveaux et sensiblement parallèlement au fond (2) du réservoir de carburant (1).

12. Dispositif selon au moins l'une des revendications précédentes, **caractérisé en ce que** les éléments de guidage (33, 34) sont configurés en forme d'ailettes.

13. Dispositif selon au moins l'une des revendications précédentes, **caractérisé en ce que** les éléments de guidage (23) ou les éléments de retenue (14) présentent une pluralité de passages (15, 22).

14. Dispositif selon au moins l'une des revendications précédentes, **caractérisé en ce que** les éléments de guidage (9) sont élastiques.

15. Dispositif selon la revendication 14, **caractérisé en ce que** les éléments de guidage (9) présentent un bras (12) élastique et **en ce qu'**une ailette de guidage (13) est fixée sur le bras (12) élastique.

16. Dispositif selon au moins l'une des revendications précédentes, **caractérisé en ce qu'**il présente des volets orientables (27, 28) pour assurer un effet d'étranglement, dans une direction, sur l'écoulement de carburant.

17. Dispositif selon au moins l'une des revendications précédentes, **caractérisé en ce que** les éléments de guidage (9 à 11, 20, 33, 34, 38, 39) et/ou les parois de guidage (4, 16 à 19, 24, 25, 35, 36) sont fabriqués d'une seule pièce avec une paroi (3) ou un fond (2) du réservoir de carburant (1).

18. Dispositif selon au moins l'une des revendications précédentes, **caractérisé en ce que** les éléments de guidage (9 à 11, 20, 33, 34, 38, 39) et/ou les parois de guidage (4, 16 à 19, 24, 25, 35, 36) sont prévus pour le passage à travers une ouverture ménagée dans la paroi (3) du réservoir de carburant (1).

19. Dispositif selon au moins l'une des revendications précédentes, **caractérisé en ce que** les éléments de guidage (9 à 11, 20, 33, 34, 38, 39) et/ou les parois de guidage (4, 16 à 19, 24, 25, 35, 36) sont soudés au fond (2) ou à la paroi (3) du réservoir de carburant (1).
